# EUROPEAN PATENT APPLICATION

(11) **EP 4 748 555 A1**
(43) Date of publication of application: **27.05.2026**
(21) Application number: 25218597.0
(22) Date of filing: 26.11.2025
(51) Int. Cl.: B29C 64/112, B29C 64/209, B29C 64/236, B33Y 30/00, B41J 25/00

(54) **FLEXURE MOUNTING AND ALIGNMENT WITHIN A THREE-DIMENSIONAL PRINTER**

(30) Priority: 26.11.2024 US 202463725246 P
(71) Applicant: 3D Systems, Incorporated, Rock Hill, SC 29730 (US)
(72) Inventor: Jones, Michael E., West Linn, OR (US); Coussens, Kasey, Hillsboro, OR (US)
(74) Representative: dompatent

(57) **Abstract**

A three-dimensional printing system (2) includes a printhead (10, 11), a printhead carriage (10), a horizontal movement mechanism (14), a printhead mount (40, 60), a plurality of flexures (42, 62), and an adjustable actuator (50). The printhead mount (40, 60) is configured to receive the printhead (10, 11). The plurality of flexures (42, 62) couple the printhead mount (40, 60) to the printhead carriage (10). The adjustable actuator (50) is configured to engage and position the printhead mount (40, 60) with a range of motion over which the plurality of flexures are under continuous bending stress to a fixed geometric configuration.

## Description

### Cross-Reference to Related Applications

This non-provisional patent application claims priority to U.S. Provisional Application Serial Number 63/725,246, Entitled "FLEXURE MOUNTING AND ALIGNMENT WITHIN A THREE-DIMENSIONAL PRINTER" by Michael E. Jones et al., filed on November 26, 2024, incorporated herein by reference under the benefit of U.S.C. 119(e).

### Field of the Invention

The present disclosure concerns an apparatus and method for fabrication of solid three-dimensional (3D) articles of manufacture from the selective deposition of materials from a printhead. More particularly, the present disclosure concerns an accurate and convenient way to provide precision mechanical alignment between two or more printheads.

### Background

Three-dimensional (3D) printing systems are in rapidly increasing use for purposes such as prototyping and manufacturing. One type of 3D printer utilizes an inkjet printhead to selectively deposit a material to form a three dimensional (3D) article of manufacture. The printhead scans along a "scan axis" and selectively and repeatedly forms layers that cumulatively define the three dimensional (3D) article of manufacture. In some embodiments each layer can be UV cured. In other embodiments phase change inks are used. As known in the art, the term "ink" includes both build materials and support materials. One challenge are 3D printers that utilize more than one printhead. As demands for precision increases, a misalignment between printheads can become more problematic.

### Summary

In a first object of the disclosure, a three-dimensional (3D) printing system is defined in mutually orthogonal axes including an X-axis, a Y-axis, and a Z-axis. The 3D printing system is configured to manufacture a 3D article and includes a printhead, a printhead carriage, a horizontal movement mechanism, a printhead mount, a plurality of flexures, and an adjustable actuator. The printhead includes and defines an array of nozzles arranged along the Y-axis and configured to eject material droplets along the Z-axis to form layers of a 3D article. The horizontal movement mechanism is configured to impart relative scanning motion between the printhead carriage and the 3D article along the X-axis. A printhead mount is configured to receive and mount the printhead. The plurality of flexures couple the printhead mount to the printhead carriage. The adjustable actuator is configured to engage and position the printhead mount with a range of motion over which the plurality of flexures are under continuous bending stress to a fixed geometric configuration.

In one implementation, adjustment of the adjustable actuator rotates the printhead mount about the Z-axis. The plurality of flexures can include two flexures whose major axes are not parallel or are at right angles to each other.

In another implementation, adjustment of the adjustable actuator displaces the printhead mount along the Y-axis. The plurality of flexures can include two flexures whose major axes are parallel. The two flexures can be coupled to opposed sides of the printhead mount with respect to the Y-axis.

In a second object of the disclosure, a three-dimensional (3D) printing system is defined in mutually orthogonal axes including an X-axis, a Y-axis, and a Z-axis. The three-dimensional (3D) printing system is configured to manufacture a three-dimensional (3D) article. The 3D printing system includes: (1) a printhead carriage, (2) a first printhead mount supporting a first printhead having a first array of nozzles arranged along the Y-axis, (3) a first pair of flexures coupling the first printhead mount to the printhead carriage, the first pair of flexures under bending stress throughout a first range of rotational positioning about Z-axis, (4) a first adjustable actuator configured adjust the rotational positioning, (5) a second printhead mount supporting a second printhead having a second array of nozzles arranged along the Y-axis, (6) a second pair of flexures coupling the second printhead mount to the printhead carriage, the second pair of flexures under bending stress throughout a second range of positioning along the Y-axis, and (7) a second adjustable actuator configured to adjust the positioning along the Y-axis.

In one implementation, the first pair of flexures have a first pair of major axes that are at right angles to one another.

In another implementation, the second pair of flexures have a second pair of major axes that are parallel to one another.

### Brief Description of the Figures

FIG. 1 is a schematic diagram of a three-dimensional (3D) printing system configured to manufacture a three-dimensional (3D) article.
FIG. 2 is a cross-sectional schematic illustration of a piezoelectric drop ejector.
FIG. 3A is a schematic layout of a printhead carriage carrying two printheads including a first printhead and a second printhead.
FIG. 3B is similar to FIG. 3A except that mechanical misalignment between the printheads is illustrated.
FIG. 4 is an isometric drawing of a printhead carriage in isolation with two printheads installed.
FIG. 5 is an isometric drawing of first printhead mount coupled to a first pair of two flexures.
FIG. 6 is a top view of a carriage with two printheads mounted with emphasis on an alignment mechanism for adjusting a "theta-Z" orientation of a first printhead of the two printheads.
FIG. 7 is an isometric drawing of second printhead mount coupled to a second pair of two flexures.
FIG. 8 is a top view of a carriage with two printheads mounted with emphasis on an alignment mechanism for adjusting a linear position along a Y-axis of a second printhead of the two printheads.
FIG. 9 is a flowchart depicting a method for mechanically mounting and aligning two printheads in a carriage.
FIG. 10 is a flowchart depicting a method of manufacturing a 3D article.

### Detailed Description of the Preferred Embodiments

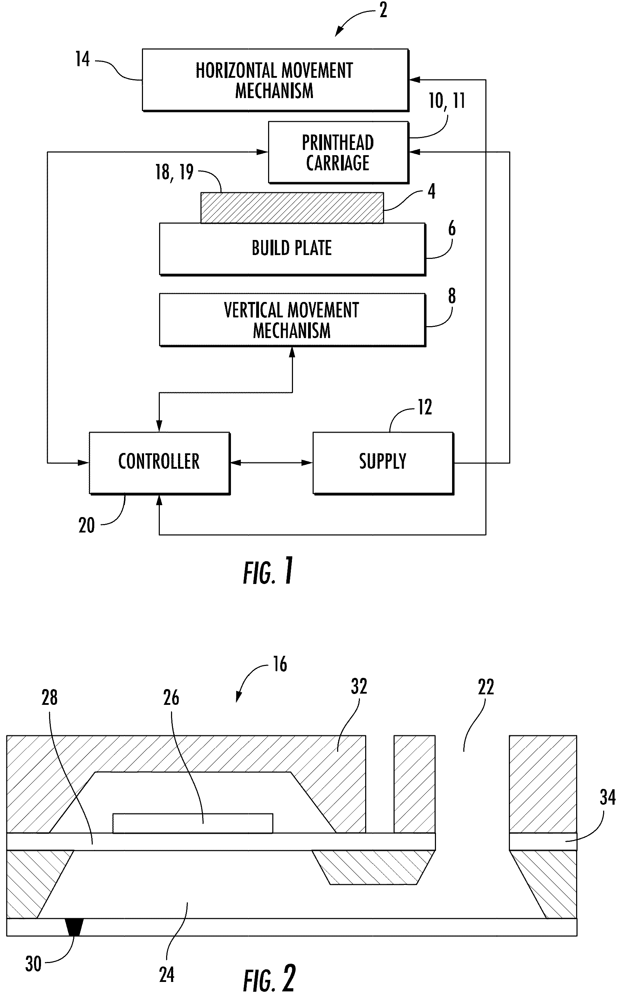

FIG. 1 is a schematic diagram of a three-dimensional (3D) printing system 2 configured to manufacture a three-dimensional (3D) article 4. In describing the printing system 2, mutually orthogonal axes X, Y, and Z can be utilized (but not shown in FIG. 1). The axes X and Y can be referred to "lateral" or "horizontal" axes and Z can be described as a "vertical" axis. However, it is to be understood that Z is not necessarily aligned with a gravitational reference. Also X will refer to a "scan" axis and Y will refer to a "transverse" axis. In some embodiments, the direction +Z is referred to as a generally "upward" direction and -Z is a generally "downward" direction. "Downward" indicates the direction of the gravitational force. In addition, in describing relative directions such as "orthogonal" it is to be understood that this is generally by design to within manufacturing tolerances. As such, there may be deviations such as one degree, two degrees, or even a larger deviation from orthogonal for some systems.

In describing various components of system 2, the term major, intermediate, and minor axes may be used. These axes are generally orthogonal and the terminology indicates relative magnitude. For example a beam having a rectangular cross section has a length defined along a major axis having a greater magnitude than a width. The beam has a width defined along an intermediate axis having a greater magnitude than a thickness defined along a minor axis.

A build plate 6 is configured to support the 3D article 4 being formed or fabricated. A vertical movement mechanism 8 is mechanically coupled to the build plate 6 and is configured to vertically position and move the build plate 6. In one embodiment, the vertical movement mechanism 8 includes a motor, a lead screw, and a nut. The nut is coupled to move vertically with the build plate 6. The motor is rotatively coupled to the lead screw which is threaded through the nut. The motor can be a stepper motor. As the motor rotates the lead screw, the effect is to raise and lower the build plate along vertical Z-axis. An alternative vertical movement mechanism 8 can includes a rack and pinion system. The rack is a linear gear coupled to the build plate. The pinion is a circular gear coupled to a motor and engaged with the linear gear. As the motor turns the pinion, the effect is to raise and lower the build plate. Yet another alternative mechanism can include a motorized belt coupled to the build plate. All such vertical movement mechanisms 8 are known in the art for imparting motion along various axes in 3D printing systems (including X, Y, Z, and oblique axes) and can be used for the vertical movement mechanism 8 and/or the horizontal movement mechanism 14 to be discussed infra.

A drop on demand piezo (DODP) printhead 11 installed in a printhead carriage 10 is fluidically coupled to a supply 12 containing and supplying a phase change ink. The supply 12 and printhead 10 include heating elements configured to maintain the ink in a liquid state. The heating elements can be resistive heating elements that individually include a resistor coupled to a power supply. The supply 12 can include a resistively heated bottle or container containing the phase change ink. Resistive heating elements can be incorporated into the container. The supply 12 can also include a flexible tube that fluidically couples the container to the printhead 10. A resistive heating element can be wrapped around the tube. The supply 12 and printhead 10 can also include thermocouples or other temperatures sensors to enable closed loop control of temperature.

In some embodiments, the phase change aspect of the ink is provided by including a wax component. The wax component can include one or more of a hydrocarbon wax, a fatty alcohol wax, a fatty acid wax, a fatty acid ester wax, an aldehyde wax, an amide wax, and a ketone wax. The wax component can provide between 50 and 80 weight percent of the ink or between 60 and 70 weight percent. Other ranges are possible.

The ink can also include a "tackifier" in a range of 5 to 50 weight percent. A tackifier is a resin added to improve immediate adhesion or stickiness of the ink to a surface. The ink can also include a monomer and/or oligomer and a catalyst. The catalyst can cause polymerization and/or cross-linking in the monomer and/or oligomer when irradiated with radiation having spectral peaks within a blue to ultraviolet (100 to 500 nanometer or nm) range. Typically, phase change inks with a monomer/oligomer and catalyst are "build material" inks for forming the 3D article 4 and inks without the monomer/oligomer and catalyst are "support material" inks used to underlie overhanging structures of build material.

The printhead carriage 10 and/or the build plate 6 are mechanically coupled to a horizontal movement mechanism 14. The horizontal movement mechanism 14 is configured to impart relative lateral or horizontal motion between the printhead and the build plate 8. This includes scanning the printhead along a scan axis X relative to the build plate 6. In referring to "scanning the printhead 10" the scan motion can be the printhead moving along X or the build plate moving along X. If the printhead is a "full width" printhead, then only one axis of motion is required. If the printhead has a partial width of an area to be printed, then printing may take place in swaths, with a relative movement in Y used to enable full printing of a required area.

For single axis movement (along X), the horizontal movement mechanism 14 can include a single linear or stepper motor that drives a lead screw, a gear train, a rack and pinion, a belt pully, or other mechanism or moving either the build plate 6 or the printhead along X. For two axis movement along X and Y, the horizontal movement mechanism 14 can include a stack of two orthogonal linear or stepper motors that move either the build plate 6 or the printhead along X and Y. In yet another embodiment, the horizontal movement mechanism 14 can include an X-motor moving the printhead and a Y-motor moving the build plate 6. All such variants of horizontal movement mechanisms 14 are known in the art for two and three-dimensional printing. In some embodiments, the horizontal movement mechanism 14 operates on a similar principle or utilizes a very similar mechanism relative to the vertical movement mechanism 8.

The printhead has an array of piezo actuators 16 (FIG. 2) configured to eject ink drops in a downward direction to selectively add material to a top surface 18 of the 3D article 4 (or initially to a top surface 18 of the build plate). From this point forward, element 18 will be referred to as the "top surface". Element 18 is shown positioned at a same vertical height as a "build plane" 19 which is an area over which the ink drops are selectively applied to pixel locations or pixels. "Pixels" form a rectangular dot matrix pattern to be selectively addressed or printed with ink drops. Pixels and rectangular dot matrix patterns are known in the art for two and three-dimensional printing.

A controller 20 is coupled to the vertical movement mechanism 8, the printhead carriage 10, the phase change ink supply 12, and the horizontal movement mechanism 14. The controller 20 includes a processor coupled to an information storage device. The information storage device stores software instructions that, when executed by the processor, control various portions of the 3D printing system 2. The controller 20, in various embodiments, may be referred to as a computer, a microcontroller, or a server (shared) computer. The controller 20 is programmed to operate components of the printing system 2 to form the 3D article 4 in a layer-by-layer manner.

FIG. 2 is a schematic illustration of an embodiment of a piezoelectric drop ejector 16 that can be a portion of the printhead 11. Ejector 16 includes a fluid manifold 22 that supplies liquified phase change ink to an array of pressure chambers 24, one of which is illustrated in cross section. A piezoelectric element 26 is coupled to a thin membrane 28. The piezoelectric element 26 changes dimension in response to receiving an electrical pulse and, in doing so, flexes the thin film membrane 28. Flexing of membrane 28 can transiently generate a pressure pulse within chamber 24 thereby ejecting a droplet of the liquified phase change ink out of nozzle 30. In this illustrative embodiment, the piezoelectric drop ejector 16 can be formed from etched silicon 32 and deposited thin films 34 of metal, glass, and ceramic. In other embodiments, a piezoelectric drop emitter 16 can be formed from laminated layers of metal and glass. In some embodiments, the piezoelectric drop ejector 16 can be formed from layered stainless steel plates.

An example of a piezoelectric printhead is a Xerox^{®} "M-Series Industrial Inkjet Jetstack". The Jetstack printheads are at least partially formed from layers of stainless steel and are compatible with a wide range of chemistries. Other piezoelectric printheads can be used that are manufactured by companies such as Ricoh, Xaar, Panasonic, Seiko Instruments, and Seiko Epson to name a few.

Other printheads can also be used in system 2. These can be based on other ejector design such as thermal inkjet which operates by pulsing a heating resistor. Yet other printheads can be used having other mechanisms for ejecting droplets of build material.

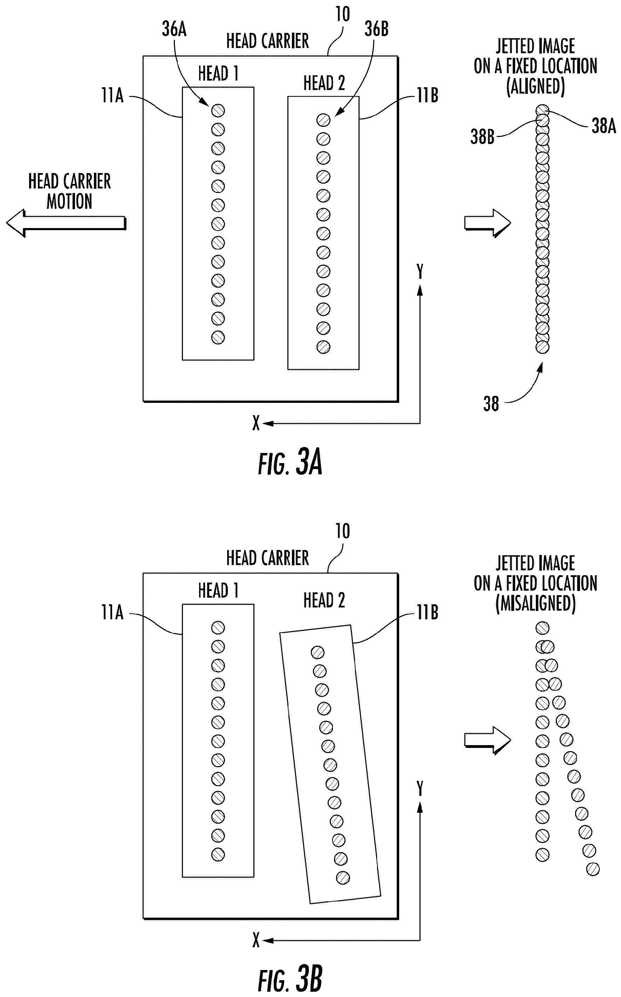

FIG. 3A is a schematic layout drawing of a printhead carriage 10 carrying two printheads 11 including a first printhead 11A and a second printhead 11B. The first 11A and second 11B printheads individually include a first 36A and second 36B array of nozzles 30 respectively. The nozzle arrays 36A, 36B are arranged along the transverse Y-axis. The horizontal movement mechanism 14 is configured to impart relative motion between the nozzle arrays 36A, 36B and the build plane19. As the nozzles 30 pass over the build plane, they selectively deposit material drops 38. FIG. 3A illustrates a case of good or ideal alignment between material drops 38A deposited by the first printhead 36A and material drops 38B deposited by the second printhead 36B. This would require high precision mechanical linear alignment along the Y-axis, mechanical rotational alignment about the vertical Z-axis, and a software (drop timing) alignment along the scan axis X.

The alignment along X can be achieved by printing test patterns and then iteratively altering the timing of ejecting material drops 38. This can be accomplished either manually or automatically. Methods for manually or automatically aligning material drops 38 along a scan axis are known in the inkjet printing art.

Alignment inaccuracy between two printheads 11A and 11B is illustrated in FIG. 3B. This is exaggerated for clarity. The alignment inaccuracy illustrated includes a theta-Z (rotation about Z-axis which shows up as an oblique angular error in the XY-plane for two arrays of material drops 38). The alignment inaccuracy illustrated also includes a linear Y-axis error.

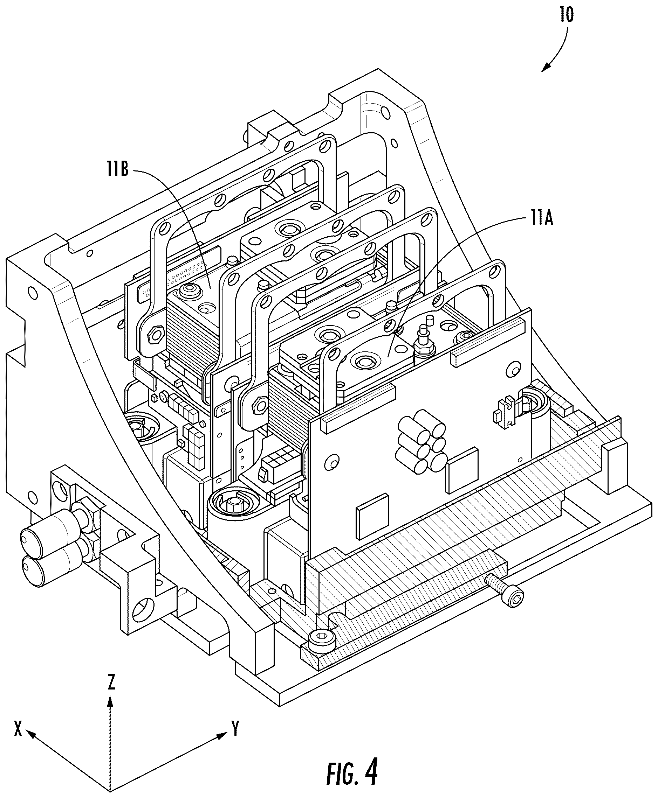

FIG. 4 is an isometric drawing of an embodiment of the printhead carriage 10. Printheads 11A and 11B are installed within and included in carriage 10. In an embodiment, the horizontal movement mechanism 14 is configured to scan the printhead carriage 10 along the X-axis over the build plane 19. The printheads 11A and 11B have nozzle arrays 36A and 36B respectively that are individually arranged along the Y-axis. The nozzle arrays 36A and 36B are configured to eject material drops 38A and 38B in the -Z direction.

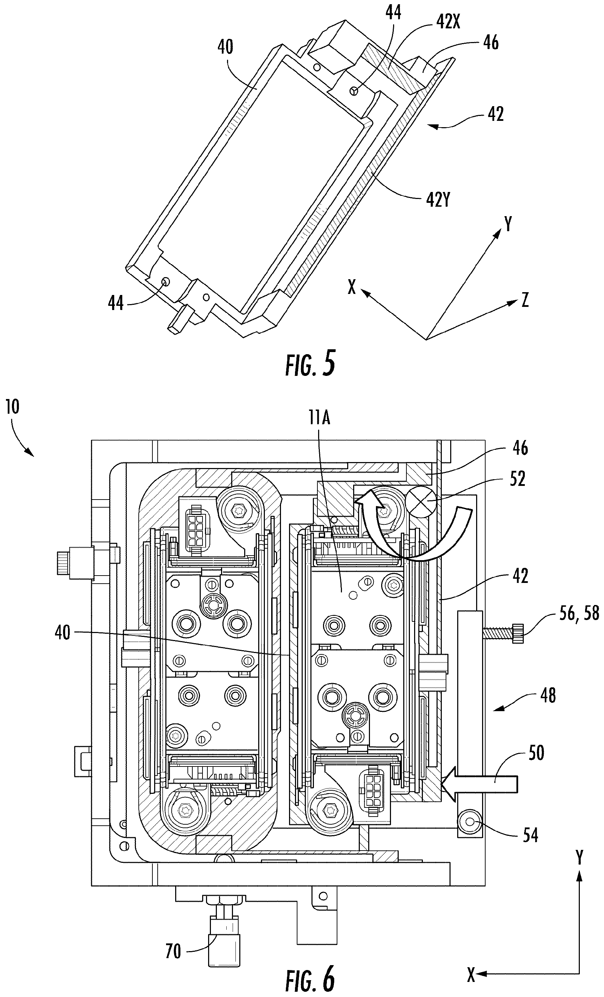

FIG. 5 is an isometric drawing of a first printhead mount 40 coupled to a pair of flexures 42X and 42Y (or element 42 combined referred to as a first pair or plurality of flexures 42). The first printhead mount 40 includes mounting holes 44 for mechanically mounting the first printhead 11A to the first printhead mount 40. The pair of flexures 42 includes a flexure mount 46 for coupling the pair of flexures 42 to the printhead carriage 10. Thus, the pair of flexures 42 couple between the first printhead mount 40 (and thus the first printhead 11A) and the printhead carriage 11A.

The flexure 42X has a major axis (length) along the X-axis, an intermediate axis (width) along the Z-axis, and a minor axis (thickness) along the Y-axis. The flexure 42Y has a major axis along the Y-axis, an intermediate axis (width) along the Z-axis, and a minor axis (thickness) along the X-axis. The major axes of the flexures 42X and 42Y are thus orthogonal and intersect at the mount 46.

FIG. 6 is a top view of the carriage 10 with printheads 11A and 11B installed with emphasis on a theta-Z alignment mechanism 48 that includes the pair of flexures 42 and an adjustable actuator 50. The first printhead 11A is rigidly mounted to the first printhead mount 40. The flexure mount 46 is rigidly coupled to the carriage 10 near a center of rotation 52. The adjustable actuator 50 is configured to press upon the printhead mount 40 at an end of the flexure 42Y that is opposite to the flexure mount 46 with respect to the Y-axis.

In the illustrated embodiment, the first adjustable actuator 50 constrains an angular location of the printhead mount 40 with respect to a vertical axis (parallel to the Z-axis) that passes through the center of rotation 52. As illustrated, the pair of flexures 42 have a bending stress so that there is a force between the adjustable actuator 50 and the printhead mount 40. The bending stress of the pair of flexures 42 fixes the theta-Z position of the printhead mount 40 with respect to the center of rotation 52.

The adjustable actuator 50 is rotationally mounted at a fixed end 54 and includes a fine threaded screw 56 at an opposite end 58 to enable a fine adjustment of the theta-Z position by rotating the fine threaded screw 56. In this embodiment, adjustment is manual. In other embodiments, the first adjustable actuator 50 can be motorized and can include a gear reduced motor for adjusting a threaded screw that in turn impinges upon the printhead mount 40. For a complete range of adjustment motion of the first adjustable actuator 50, the pair of flexures are under bending stress.

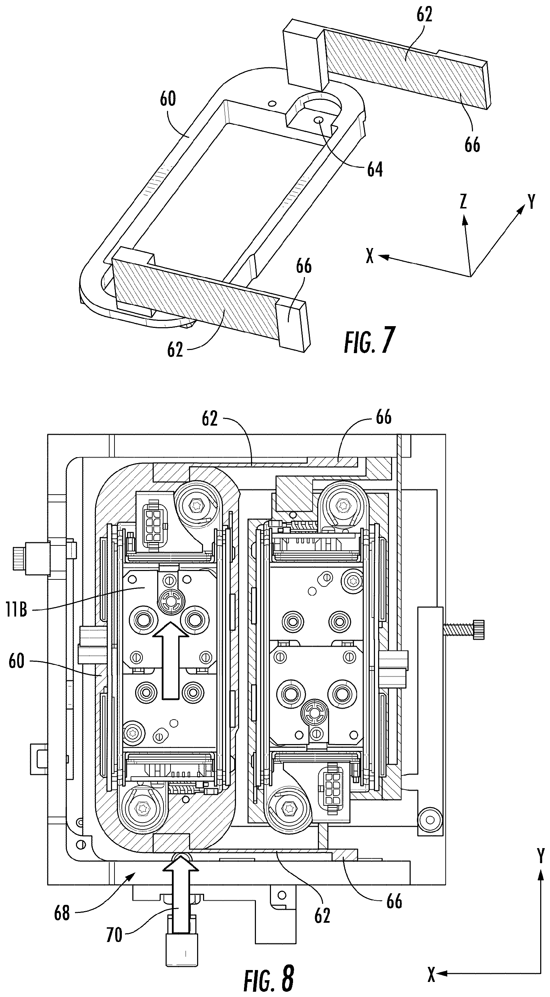

FIG. 7 is an isometric drawing of a second printhead mount 60 coupled to a second pair or plurality of flexures 62. The second printhead mount 60 includes mounting holes 64 for mechanically mounting the second printhead 11B to the second printhead mount 60. The pair of flexures 62 individually include a flexure mount 66 for coupling the pair of flexures 62 to the printhead carriage 10. Thus, the pair of flexures 62 couple between the first printhead mount 60 (and thus the second printhead 11B) and the printhead carriage 11A.

The pair of flexures 62 individually have a major axis (length) along the X-axis, an intermediate axis (width) along the Z-axis, and a minor axis (thickness) along the X-axis. The pair of flexures 62 are parallel and coupled to opposed ends of the printhead mount 60 with respect to Y.

FIG. 8 is a top view of the carriage 10 with printheads 11A and 11B installed with emphasis on a Y-alignment mechanism 68 that includes the pair of flexures 62 and an adjustable actuator 70. The second printhead 11B is rigidly mounted to the second printhead mount 60. The flexure mounts 66 are rigidly coupled to the carriage 10. The second adjustable actuator 70 is configured to press upon the printhead mount 60 to apply a force along the Y axis at an end of the flexure 62 opposed to the flexure mounts 66 with respect to the X-axis.

In the illustrated embodiment, the second adjustable actuator 70 constrains a linear location of the printhead mount 60 with respect to the Y-axis. As illustrated, the pair of flexures 62 have a bending stress so that there is a force between the second adjustable actuator 70 and the second printhead mount 60. The bending stress of the pair of flexures 62 fixes the Y position of the printhead mount 60.

In the illustrated embodiment, the second adjustable actuator 70 is a fine pitch screw to enable a fine adjustment of the Y-position. In some embodiments, the second adjustable actuator 70 can be gear reduced to improve adjustment accuracy. In this embodiment, adjustment is manual. In other embodiments, the second adjustable actuator 70 can be motorized and can include a gear reduced motor for adjusting a threaded screw that in turn impinges upon the printhead mount 60. For a complete range of adjustment motion of the second adjustable actuator 70, the pair of flexures 62 are under bending stress.

The flexures 42, 62 can be formed from resilient metals or metal alloys such as stainless steel. Type and hardness of the metal or alloy can be selected to provide the range of adjustment motion and a high enough bending stress to provide stability. The flexures 42, 62 can be attached to the printhead mounts 40, 60 with machine screws or welding.

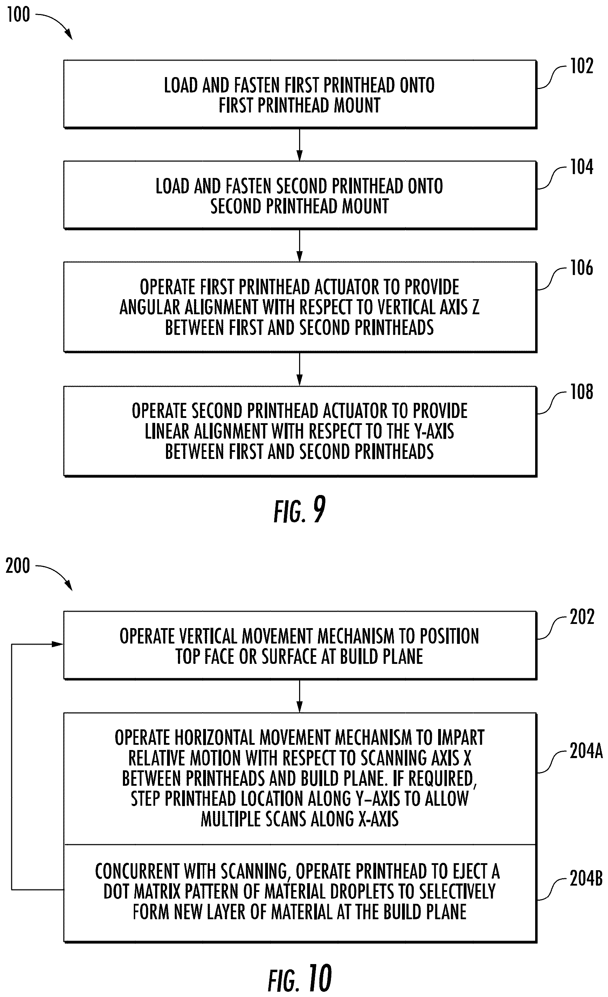

FIG. 9 is a flowchart depicting a method 100 for mechanically loading and aligning the printheads 11 in the 3D printing system 2. According to 102, the first printhead 11A is loaded and fastened to the first printhead mount 40. Fastening can include threading and tightening screws or other methods of forming a rigid mechanical coupling between the first printhead 11A and the first printhead mount 40.

According to 104, the second printhead 11B is loaded and fastened to the second printhead mount 60. Fastening can include threading and tightening screws or other methods of forming a rigid mechanical coupling between the second printhead 11B and the second printhead mount 60.

According to 106, the first adjustable actuator 50 is operated to angularly (theta-Z) align the first printhead 11A with respect to the second printhead 11B. An embodiment of step 106 includes first printing a test plot and then determining an amount of angular adjustment based upon an angular error determination. Step 106 can be iterative including steps of (1) generating a test plot, (2) determining an angular error about the Z-axis by measuring an angular error on the test plot, (3) determining how much to adjust the first adjustable actuator based upon the measurement, (4) adjusting the first adjustable actuator based upon (3), and then repeating (1)-(4) until the angular error falls below a predetermined threshold.

According to 108, the second adjustable actuator 70 is operated to linearly (along Y) align the second printhead 11B with respect to the first printhead 11A. An embodiment of step 108 includes first printing a test plot and then determining an amount of linear adjustment based upon an angular error determination. Step 108 can be iterative including steps of (1) generating a test plot, (2) determining linear error along the Y-axis by measuring a placement comparison on the test plot, (3) determining how much to adjust the second adjustable actuator 70 based upon the measurement, (4) adjusting the second adjustable actuator 70 based upon (3), and then repeating (1)-(4) until the linear error falls below a predetermined threshold.

In addition to the steps shown for FIG. 9, method 100 can also include a correction for misalignment in X. As for steps 106 and 108, this can be iterative including steps of (1) generating a test plot, (2) determining linear error along the X-axis by measuring a placement comparison on the test plot, (3) determining how much to adjust the drop timing between printheads 11A and 11B based upon the measurement, (4) adjusting the drop timing (3), and then repeating (1)-(4) until the linear error falls below a predetermined threshold.

As a note, steps 108 and 006 can be performed in reverse order (108 before 106) or concurrently. Correction for misalignment in X can also occur before, after or concurrently with one or more of steps 106 and 108.

FIG. 10 is a flowchart depicting a method 200 of manufacturing a 3D article 4 using the 3D printing system 2. According to 202, the vertical movement mechanism 8 is operated to position an upper surface or top face of the 3D article 4 (or initially the build plate 6) at the build plane 19.

According to 204A, the horizontal movement mechanism 14 is operated to impart relative horizontal motion along the scan axis X between the printhead carriage 10 and the build plane 19. According to 204B, concurrent with 204A, the printhead(s) 11 are operated to eject a dot matrix pattern of material droplets to selectively form a new layer of material at the build plane 19. As part of 204A/B, the horizontal movement mechanism may position the printhead carriage 10 along the Y-axis to allow for multiple scans to fully address the build plane 19. Steps 203 and 204A/B are repeated to complete formation of the 3D article 4.

The specific embodiments and applications thereof described above are for illustrative purposes only and do not preclude modifications and variations encompassed by the scope of the following claims. For example, the description describes an implementation for two printheads. However, certain claims can apply to a single printhead or more than two printheads. In particular, sometimes a claim may recite a first element and then a second element. This does not preclude a third or any number of such elements.

## Claims

1. A three-dimensional (3D) printing system defined in mutually orthogonal axes including an X-axis, a Y-axis, and a Z-axis, comprising:
a printhead having an array of nozzles arranged along the Y-axis and configured to eject material droplets along the Z-axis to form layers of a 3D article;
a printhead carriage;
a horizontal movement mechanism configured to impart relative scanning motion between the printhead carriage and the 3D article along the X-axis;
a printhead mount configured to receive and mount the printhead;
a plurality of flexures coupling the printhead mount to the printhead carriage;
an adjustable actuator configured to engage and position the printhead mount with a range of motion over which the plurality of flexures are under continuous bending stress to a fixed geometric configuration.

2. The three-dimensional (3D) printing system of claim 1 wherein adjustment of the adjustable actuator rotates the printhead mount about the Z-axis.

3. The three-dimensional (3D) printing system of claim 2 wherein the plurality of flexures include two non-parallel flexures.

4. The three-dimensional (3D) printing system of claim 1 wherein adjustment of the adjustable actuator displaces the printhead mount along the Y-axis.

5. The three-dimensional (3D) printing system of claim 4 wherein the plurality of flexures include two flexures that coupled to opposed sides of the printhead mount with respect to the Y-axis.

6. The three-dimensional (3D) printing system of claim 1 wherein:
the printhead includes a first printhead and a second printhead;
the first printhead includes a first array of nozzles, the second printhead includes a second array of nozzles;
the printhead mount includes a first printhead mount and a second printhead mount configured to receive the first printhead and the second printhead respectively; and
the adjustable actuator includes a first adjustable actuator and a second adjustable actuator configured to engage and position the first printhead mount and the second printhead mount respectively.

7. The three-dimensional (3D) printing system of claim 6 wherein the first adjustable actuator is configured to rotationally position the first printhead mount about the Z-axis and to render parallel the first array of nozzles and the second array of nozzles.

8. The three-dimensional (3D) printing system of claim 6 wherein the second adjustable actuator is configured to linearly position the second printhead mount along the Y-axis to align the first and second arrays of nozzles along the Y-axis.

9. The three-dimensional (3D) printing system of claim 7 wherein the second adjustable actuator is configured to linearly position the second printhead mount along the Y-axis to align the first and second arrays of nozzles along the Y-axis.

10. The three-dimensional (3D) printing system of claim 6 wherein the first printhead mount is attached to the printhead receiving receptacle by a pair of flexures having major axes that extend at right angles with respect to each other.

11. The three-dimensional (3D) printing system of claim 6 wherein the second printhead mount is attached to the printhead carriage by a pair of flexures having major axes that are parallel and are spaced apart from each other with respect to the Y-axis.

12. The three-dimensional (3D) printing system of claim 6 further comprising a vertical movement mechanism and a controller, the controller is configured to:
(1) operate the vertical movement mechanism to position a top surface of the 3D article at a build plane;
(2) operate the horizontal movement mechanism to impart scanning motion of the printhead carriage over the build plane;
(3) operate the printhead to eject a dot matrix pattern of material droplets to form a new layer of material at the build plane; and
(4) repeat (1) - (3) to complete formation of the 3D article.

13. A three-dimensional (3D) printing system defined in mutually perpendicular axes including an X-axis, a Y-axis, and a Z-axis, the three-dimensional (3D) printing system configured to manufacture a 3D article comprising:
a printhead carriage;
a horizontal movement mechanism configured to impart relative scanning motion between the printhead carriage and the 3D article along the X-axis;
a first printhead mount supporting a first printhead having a first array of nozzles arranged along the Y-axis;
a first pair of flexures coupling the first printhead mount to the printhead carriage, the first pair of flexures under bending stress throughout a first range of rotational positioning about Z-axis;
a first adjustable actuator configured adjust the rotational positioning;
a second printhead mount supporting a second printhead having a second array of nozzles arranged along the Y-axis;
a second pair of flexures coupling the second printhead mount to the printhead carriage, the second pair of flexures under bending stress throughout a second range of positioning along the Y-axis; and
a second adjustable actuator configured to adjust the positioning along the Y-axis.

14. The three-dimensional (3D) printing system of claim 13 wherein the first pair of flexures have a first pair of major axes that are at right angles to one another.

15. The three-dimensional (3D) printing system of claim 13 wherein the second pair of flexures have a second pair of major axes that are parallel to one another.

16. The three-dimensional (3D) printing system of claim 14 wherein the second pair of flexures have a second pair of major axes that are parallel to one another.

17. A method of manufacturing a three-dimensional (3D) article comprising:
configuring a three-dimensional (3D) printing system including:
a printhead having an array of nozzles arranged primarily along a horizontal Y-axis and configured to eject material droplets along a vertical Z-axis to form layers of a 3D article;
a printhead carriage;
a horizontal movement mechanism;
a printhead mount configured to receive and mount the printhead;
a plurality of flexures coupling the printhead mount to the printhead carriage;
an adjustable actuator configured to engage and position the printhead mount with a range of motion over which the plurality of flexures are under continuous bending stress to a fixed geometric configuration;
operating a vertical movement mechanism to position a top surface of the 3D article at a build plane;
operating the horizontal movement mechanism to impart relative scanning motion between the printhead receiving receptacle and the 3D article along a horizontal X-axis that is perpendicular to the Y-axis; and
concurrent with operating the horizontal movement mechanism, operating the printhead to eject droplets to form a dot matrix pattern over the build plane.

18. The method of claim 17 wherein:
the printhead includes a first printhead and a second printhead;
the first printhead includes a first array of nozzles, the second printhead includes a second array of nozzles;
the printhead mount includes a first printhead mount and a second printhead mount configured to receive the first printhead and the second printhead respectively; and
the adjustable actuator includes a first printhead actuator and a second printhead actuator configured to engage and position the first printhead mount and the second printhead mount respectively;
the method includes operating the adjustable actuator to align the first and second printhead rotationally with respect to the Z-axis and linearly with respect to the Y-axis.
